# EUROPEAN PATENT APPLICATION

(11) **EP 4 789 894 A1**
(43) Date of publication of application: **12.08.2026**
(21) Application number: 25157153.5
(22) Date of filing: 11.02.2025
(51) Int. Cl.: B60L 1/02, B60L 58/27, H01M 10/615, H01M 10/625, H01M 10/6571

(54) **BATTERY SYSTEM AND METHOD THEREOF AND ELECTRIC VEHICLE**

(71) Applicant: Samsung SDI Co., Ltd., Yongin-si, Gyeonggi-do 17084 (KR)
(72) Inventor: Cakici, Mehmet, 8020 Graz (AT)
(74) Representative: Gulde & Partner

(57) **Abstract**

The present disclosure refers to a battery system (100), an electric vehicle (2000) including the battery system (100) and a method for the battery system (100).

The battery system (100) includes a battery pack (10) with a plurality of battery cells (12) connected to two high voltage lines (14) to form a high voltage, HV, system (16). Each of the high voltage lines (14) includes a main high voltage switch (18) configured to connect the plurality of battery cells (12) to or disconnect the plurality of battery cells (12) from the respective high voltage line (14). The battery system (100) further includes a battery heating system (20) for heating the plurality of battery cells (12) of the battery pack (10) with a heating element (22) and a heating switch (24) connected in series with the heating element (22). The heating element (22) and the heating switch (24) are connected in parallel to one of the high voltage lines (14). The battery system (100) further includes a low voltage, LV, system (26) and a battery management system, BMS, (28) connected to the LV system (26). The BMS (28) includes a signal transmission means (30) configured to transmit a switching signal to the heating switch (24) in a galvanically isolated manner for controlling the heating switch (24) of the battery heating system (20). The battery heating system (20) is configured to receive the switching signal from the signal transmission means (30) of the BMS (28).

## Description

### Field of the Disclosure

Embodiments of the present disclosure relate to a battery system, an electric vehicle including the battery system and a method for the battery system.

### Technological Background

Recently, vehicles for transportation of goods and peoples have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. Common battery cell formats, include, for example, cylindrical, prismatic, and pouch.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common cell management unit and arranged in a housing. In the modular design, pluralities of battery cells are connected together to form submodules and several submodules are connected together to form the battery module. In automotive applications, battery systems often include a plurality of battery modules connected together in series to provide a desired voltage.

A battery pack is a set of any number of (for example identical) battery modules and/or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percent of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

The effective management of thermal energy is essential for the optimal functioning and longevity of lithium-ion batteries in mobile applications. This is because the ability to regulate temperature is crucial for maintaining full performance and operational readiness in a wide range of conditions. Thermal management encompasses both cooling and heating operations. Given the considerable diversity of lithium-ion battery variants, characterized by differences in cell chemistry and structure, thermal management must be tailored to the specific requirements of each variant. A similar situation pertains with regard to the numerous different vehicle applications, which encompass a range of vehicles from small city cars to sports cars, as well as vehicles with mild hybridization and purely electric vehicles. Furthermore, integration into the vehicle's thermal circuits is of significant importance.

Battery cells may no longer generate a desired (or designed) amount of power when operating outside of their operating temperature range. This range which is typically specified by the manufacturer includes a minimum and maximum temperature at which the battery can operate safely and effectively. Operating the battery outside this temperature range can lead to performance degradation, reduced capacity, and safety concerns. Specifically, lithium-ion batteries are known for their poor performance at cold temperatures (e.g. below 0°C). If the temperature drops even further, e.g. below -20°C, lithium-ion batteries can become completely inoperative. Therefore, it is crucial to avoid subjecting lithium batteries to extremely cold conditions, as it can severely affect their functionality. Thus, battery cell heating systems are required.

Heating systems which generally use heating liquid circulation or electrically wired heating systems (electric heater) are known. However, these heat systems require plenty of additional wirings and/or ducts and involve the risk of causing a harmful overvoltage in the event of a fault in the battery system connected to the heating system, which could injure people and/or damage electronic parts.

### Summary of Invention

The invention is defined by the appended claims. The description that follows is subjected to this limitation. Any disclosure lying outside the scope of the claims is only intended for illustrative as well as comparative purposes.

According to an embodiment, a battery system includes a battery pack including a plurality of battery cells connected to two high voltage lines to form a high voltage, HV, system. Each of the high voltage lines includes a main high voltage switch configured to connect the plurality of battery cells to or disconnect the plurality of battery cells from the respective high voltage line. The battery system further includes a battery heating system for heating the plurality of battery cells of the battery pack including a heating element and a heating switch connected in series with the heating element. The heating element and the heating switch are connected in parallel to one of the high voltage lines. The battery system further includes a low voltage, LV, system and a battery management system, BMS, connected to the LV system including a signal transmission means configured to transmit a switching signal to the heating switch in a galvanically isolated manner for controlling the heating switch of the battery heating system. The battery heating system is configured to receive the switching signal from the signal transmission means of the BMS.

According to another embodiment, an electric vehicle includes the battery system.

Yet another embodiment of the present disclosure refers to a method for a battery system including the steps of a) providing a battery system as defined above; b) transmitting a switching signal to the heating switch of the battery heating system of the battery system in a galvanically isolated manner for controlling the heating switch; and c) receiving the switching signal with the battery heating system.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates an electric circuit diagram of a battery system according to an embodiment.
FIG. 2 illustrates an electric vehicle including a battery system according to an embodiment.
FIG. 3 illustrates a schematic diagram of a method for the battery system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one embodiment of the present disclosure, a battery system is provided. The battery system includes a battery pack, a battery heating system, a LV system and a BMS.

The battery pack includes a plurality of battery cells connected to two high voltage lines to form a HV system. In other words, one end of the battery cells is connected with one of the high voltage lines and the other end of the battery cells is connected with the other one of the high voltage lines. For example, the battery cells may be connected in series with each other. The HV system may operate at a voltage of 100 V, 200V or more. The HV system may be used to propel an electric vehicle. Each of the high voltage lines includes a main high voltage switch configured to connect the plurality of battery cells to or disconnect the plurality of battery cells from the respective high voltage line. The main high voltage switch allows to shut off the battery cells of the battery pack from the high voltage lines, e.g. as a safety measure in case of a failure of one or more of the battery cells of the battery pack.

The battery heating system for heating the plurality of battery cells of the battery pack includes a heating element and a heating switch connected in series with the heating element. The heating element and the heating switch are connected in parallel to one of the high voltage lines. Due to the parallel connection of the heating element and the heating switch with regard to the high voltage line, the heating element and the heating switch are connected in series with the other loads of the high voltage line. Advantageously, the voltage of the high voltage line is distributed over the loads and the heating element (as a load) such that it may be ensured that the heating element may be equally powered with respect to the other loads. The heating element is a component configured to produce heat to increase the temperature in its environment. The heating element may be configured to produce heat based on consumption of electricity, for example, a heating wire. The heating switch is configured to tie the heating element to the high voltage line based on the switch signal. The heating switch may be a transistor, e.g. a metal-oxide-semiconductorfield-effect transistor (MOSFET) configured to tie the heating element to the high voltage line when a control signal is received. MOSFET are cheap components. The heating switch enables or disables an electric flow through the heating element for heating the battery pack.

The LV system may operate at a voltage of less than 20 V, for example 12 V. The LV system may be used to power electrical subsystems of the battery system and/or am electric vehicle, e.g. lights and displays.

The BMS is connected to the LV system and includes a signal transmission means configured to transmit a switching signal to the heating switch in a galvanically isolated manner for controlling the heating switch of the battery heating system and the battery heating system is configured to receive the switching signal from the signal transmission means of the BMS. For example, the heating switch includes a signal reception means configured to receive the switching signal. In other words, the battery system includes a galvanic separation between the battery heating system and the BMS. That is, no wired connection between the BMS and the heating switch in the HV system is present, thereby realizing the galvanic isolation between the LV and HV systems. Since the wired electrical connection between the battery heating system and the LV system is eliminated, the risk of causing a harmful overvoltage in the event of a fault in the battery system connected to the battery heating system, which could injure people and/or damage electronic parts, can be reduced and the safety of the battery system can be enhanced. Furthermore, integration costs and effort caused by wired electrical connections between the BMS and the battery heating system are also eliminated or at least significantly reduced.

According to one embodiment, the signal transmission means of the BMS may include a transmission coil and the battery heating system may include a reception coil for transmitting the switching signal via induction. In other words, the signal reception means of the battery heating system may include the reception coil. The reception coil may be electrically connected to the heating switch to provide the received switching signal to the heating switch. Due to the BMS being (only) magnetically coupled to the heating switch, no wired connection between the BMS (and the LV system) and the heating switch in the HV system is present, thereby realizing the galvanic isolation between the LV and HV system. The use of induction coils is simple and at low cost possible.

According to another embodiment, the battery system may further include a battery frame and/or a battery heating/cooling circulation system. The battery heating system may be arranged into or onto the battery frame or the battery heating/cooling circulation system. For example, the battery heating system may be arranged on an inside surface of a wall of the battery frame. The battery heating/cooling circulation system may be used to conduct heat through the battery system to prevent excessive heat buildup or to distribute thermal energy to heat the battery system. Advantageously, the battery heating system may be arranged inside the battery system in a space saving manner. Furthermore, the heat generated by the heating element may be distributed efficiently through the arrangement thereof near the battery heating/cooling circulation system.

According to another embodiment, the heating element and the heating switch may be connected to the high voltage line between the plurality of battery cells and the main high voltage switch of the high voltage line. In other words, the heating element and the heating switch are connected to two points on the high voltage line which are arranged between the plurality of battery cells and the main high voltage switch of the high voltage line. Advantageously, it may be prevented that the electrical power provided by the battery cells may bypass the main high voltage switch via the heating element and the heating switch when the heating switch is closed and the main high voltage switch is opened. In other words, the heating of the heating element may be cut off when the main high voltage switch is opened (to disconnect the battery cells from the high voltage line).

According to another embodiment, the battery heating system may include a plurality of heating elements connected in series with the heating switch. In other words, the received switch signal may activate a plurality of heating elements to heat the battery cells. Advantageously, the heating power can be increased and/or generated at different locations of the battery system, while the effort for implementing the control of the battery heating system maintains the same.

According to another embodiment, the battery heating system may further include a plurality of pairs of heating elements and heating switches connected in series with each other. That is, the heating element and the heating switch of each pair is connected in series with each other. At least two of the pairs of heating elements and heating switches are each connected in parallel to one of the high voltage lines. Series connection of loads is in general susceptible to failure (in the sense of interruption), namely if a single element is disconnected or removed from the electrical line, the entire series fails. However, since the battery heating system provides redundant heating elements connected in parallel to one of the high voltage lines and connected in series with other loads in the high voltage line, a failure of one of the heating elements does not cause a failure of the entire high voltage line. The pairs of heating elements and heating switches may be controlled by the (same) BMS or by different BMS's, e.g. the battery system may include one BMS for each of the pairs of heating elements and heating switches.

According to another embodiment, the battery system may further include a second battery heating system including a second heating element and a second heating switch connected in series with the second heating element. The second heating element and the second heating switch may be connected to both main high voltage lines of the battery pack. The main high voltage switches may be connected between the second battery heating system and the plurality of battery cells of the battery pack, respectively. Due to the connection of the second battery heating system to both of the high voltage lines, the full battery pack voltage may be used for heating the battery cells. Furthermore, the second battery heating system is arranged on a side of the main voltage switches opposite to the plurality of battery cells such that a semiconductor switch leakage current may be avoided.

According to another embodiment, the battery system may further include a second BMS connected to the LV system. The second BMS may include a second signal transmission means configured to transmit a second switching signal to the second heating switch in a galvanically isolated manner for controlling the second heating switch of the second battery heating system. The second battery heating system may be configured to receive the second switching signal from the second signal transmission means of the second BMS. The use of individual BMS for each battery heating system improves the resilience of the heating of the battery system since a failure related to one of the BMS does not affect each of the battery heating systems. In other words, even if a BMS is subject to a failure, the remaining battery heating systems may operate normally to provide heat to the battery system to ensure that the battery cells are operating within their operating temperature range.

According to another embodiment of the present disclosure, an electric vehicle including the above-mentioned battery system is provided. The features and advantages described in view of the above-mentioned battery system may be analogously applied to the electric vehicle.

According to another embodiment of the present disclosure, a method for a battery system, e.g. the above-mentioned battery system, is provided. The features and advantages described in view of the above-mentioned battery system may be analogously applied to the method.

According to a first step of the method, the above-mentioned battery system is provided.

According to a second step of the method, a switching signal is transmitted to the heating switch of the battery heating system of the battery system in a galvanically isolated manner for controlling the heating switch.

According to a third step of the method, the switching signal is received by the battery heating system.

### Specific Embodiments

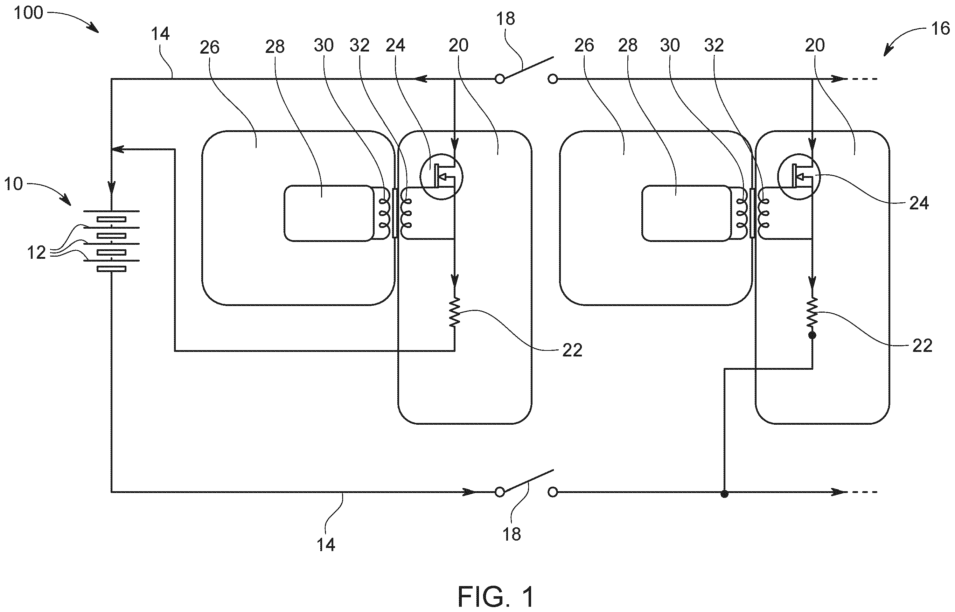

FIG. 1 illustrates an electric circuit diagram of a battery system 100 according to an embodiment. The battery system 100 is more reliable, safety-enhanced and manufacturable at low cost.

The battery system 100 includes a battery pack 10 including a plurality of battery cells 12 connected in series to provide a high voltage of more than 100 V and two high voltage lines 14. Each end of the series connected plurality of battery cells 12 is connected to one of the high voltage lines 14. The battery system 100 further includes a high voltage, HV, system 16 which is formed by the plurality of battery cells 12 and the high voltage lines 14. Each of the high voltage lines 14 includes a main high voltage switch 18 configured to (selectively) connect the plurality of battery cells 12 to or disconnect the plurality of battery cells 12 from the respective high voltage line 14. The main high voltage switches 18 allow to shut off the battery cells 12 of the battery pack 10 from the high voltage lines 14 as a safety measure in case of a failure of the battery pack 10.

The battery system 100 further includes a battery heating system 20 for heating the plurality of battery cells 12 of the battery pack 10 with a heating element 22 and a heating switch 24 connected in series with the heating element 22. The heating element 22 is a component configured to produce heat to increase the temperature in its environment. More specifically, the heating element 22 is configured to produce heat based on consumption of electricity, e.g. electrical energy provided by the plurality of battery cells 12 in the HV voltage system 16. The heating element 22 as shown in FIG.1 is a heating wire. However, the present disclosure is not limited thereto and a variety of other kinds of heating elements may be used. The heating switch 24 is configured to tie the heating element 22 to the high voltage line 14 based on a switch signal (which will be discussed later on). The heating switch 24 as shown in FIG. 1 is a transistor, namely a metal-oxide-semiconductor field-effect transistor (MOSFET) configured to tie the heating element 24 to the high voltage line 14 when a control signal is applied to the gate of the MOSFET. Thus, the heating switch 24 enables or disables an electric flow through the heating element 22 for heating the battery pack 10.

The heating element 22 and the heating switch 24 are connected in parallel to one of the high voltage lines 14 (the upper high voltage line 14 as shown in FIG. 1). Due to the parallel connection of the heating element 22 and the heating switch 24 with regard to the high voltage line 14, the heating element 22 and the heating switch 24 are connected in series with other loads of the high voltage line 14, e.g. loads beyond the main high voltage switch 18 (i.e. loads connected to the right side of the upper main high voltage switch 18 in FIG. 1). Advantageously, the voltage of the high voltage line 14 is distributed over the other loads and the heating element 22 (as a load) such that it may be ensured that the heating element 22 may be equally powered with respect to the other loads.

The battery system 100 further includes a low voltage, LV, system 26 and a battery management system, BMS, 28 connected to the LV system 26. The BMS 28 includes a signal transmission means 30 configured to transmit a switching signal to the heating switch 24 in a galvanically isolated manner for controlling the heating switch 24 of the battery heating system 20. The battery heating system 20 is configured to receive the switching signal from the signal transmission means 30 of the BMS 28 through a signal reception means 32. In other words, the battery system 100 includes a galvanic separation between the battery heating system 20 and the BMS 28. That is, no wired connection between the BMS 28 and the heating switch 24 in the HV system 16 is present, thereby realizing the galvanic isolation between the LV system 26 and the HV system 16. Since the wired electrical connection between the battery heating system 20 and the LV system 26 is eliminated, the risk of causing a harmful overvoltage in the event of a fault in the battery system 100 connected to the battery heating system 20, which could injure people and/or damage electronic parts, can be reduced and the safety of the battery system 100 can be enhanced. Furthermore, integration costs and effort caused by wired electrical connections between the BMS 28 and the battery heating system 20 are also eliminated or at least significantly reduced.

The signal transmission means 30 includes a transmission coil configured to transmit the switching signal via induction. The signal reception means 32 of the battery heating system 20 includes a reception coil configured to receive the switching signal transmitted by the transmission coil via induction. The reception coil is electrically connected to the gate of the heating switch 24 to provide the received switching signal to the heating switch 24. Based on the received switching signal, the heating switch 24 allows or prevents the electrical flow through the heating element 22. As the BMS 28 is magnetically coupled to the heating switch 22, no wired connection between the BMS 28 (and the LV system 26) and the heating switch 22 in the HV system 16 is present such that a galvanic isolation between the LV system 26 and the HV system 16 is realized.

As shown in FIG. 1, the battery system 100 further includes a second battery heating system 20 (right side of FIG. 1) including a second heating element 22 and a second heating switch 24 connected in series with the second heating element 22. However, the second battery heating system 20 may also be omitted. In difference to the first battery heating system 20 (shown on the left side of FIG. 1), the second heating element 22 and the second heating switch 24 are connected to both main high voltage lines 14 of the battery pack 10. In other words, each end of the series connected second heating element 22 and the second heating switch 24 is connected to one of the two high voltage lines 14. Due to the connection of the second battery heating system 20 to both of the high voltage lines 14, the full voltage of the battery pack 10 can be used for the heating of the battery cells 12. The main high voltage switches 18 are connected between the second battery heating system 20 and the plurality of battery cells 12 of the battery pack 10, respectively. In other words, the second battery heating system 20 is arranged on a side of the main voltage switches 18 opposite to the plurality of battery cells 12 such that a semiconductor switch leakage current can be avoided.

The battery system 100 further includes a second BMS 28 (see the right side of FIG. 1) connected to the LV system 16. The second BMS 28 includes a second signal transmission means 30 configured to transmit a second switching signal to the second heating switch 24 in a galvanically isolated manner for controlling the second heating switch 24 of the second battery heating system 20. The second battery heating system 20 also includes a signal reception means 32 configured to receive the second switching signal from the second signal transmission means 30 of the second BMS 28. The work principle of the second signal transmission means 30 and the second signal reception means 32 may be the same as of the described (first) signal transmission means 30 and (first) signal reception means 32. The use of individual BMS 28 for each battery heating system 20 improves the resilience of the heating of the battery system since a failure related to one of the BMS 28 does not affect each of the battery heating systems 20. In other words, even if a BMS 28 is subject to a failure, the remaining battery heating systems 20 may operate normally to provide heat to the battery system 100 to ensure that the battery cells 12 are operating within their operating temperature range.

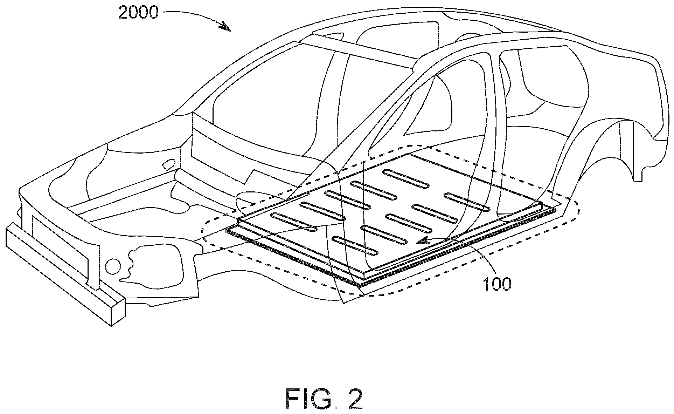

FIG. 2 illustrates an electric vehicle 2000 including a battery system 100, e.g. the battery system 100 of FIG. 1, according to an embodiment. The battery system 100 is arranged in the underbody of the electric vehicle 2000. However, the arrangement of the battery system 100 in the electric vehicle 2000 may also be different, e.g. in the trunk or under the bonnet of the electric vehicle 2000. The HV system 16 of the battery system 100 is used to propel the electric vehicle 2000.

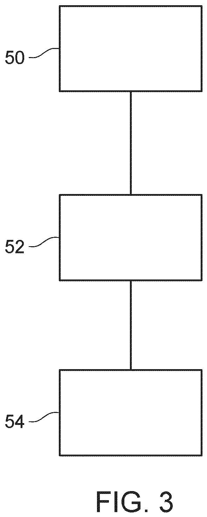

FIG. 3 illustrates a schematic diagram of a method for the battery system 100 according to an embodiment.

According to a first step 50 of the method, the above-mentioned battery system 100 is provided.

According to a second step 52 of the method, a switching signal is transmitted to the heating switch 24 of the battery heating system 20 of the battery system 100 in a galvanically isolated manner, e.g. via induction, for controlling the heating switch 24.

According to a third step 54 of the method, the switching signal is received by the battery heating system 100. According to the received switch signal, the heating switch 24 is controlled to allow or prevent electrical flow through the heating element 22.

### Reference signs

- 10: battery pack
- 12: plurality of battery cells
- 14: high voltage lines
- 16: high voltage system
- 18: main high voltage switch
- 20: battery heating system
- 22: heating element
- 24: heating switch
- 26: low voltage system
- 28: battery management system
- 30: signal transmission means
- 32: signal reception means

- 50: first method step - providing battery system
- 52: second method step - transmitting switching signal
- 54: optional third method step - receiving switching signal

- 100: battery system
- 2000: electric vehicle

## Claims

1. A battery system (100), comprising:
a battery pack (10) comprising a plurality of battery cells (12) connected to two high voltage lines (14) to form a high voltage, HV, system (16), wherein each of the high voltage lines (14) comprises a main high voltage switch (18) configured to connect the plurality of battery cells (12) to or disconnect the plurality of battery cells (12) from the respective high voltage line (14);
a battery heating system (20) for heating the plurality of battery cells (12) of the battery pack (10) comprising a heating element (22) and a heating switch (24) connected in series with the heating element (22), wherein the heating element (22) and the heating switch (24) are connected in parallel to one of the high voltage lines (14);
a low voltage, LV, system (26); and
a battery management system, BMS, (28) connected to the LV system (26) comprising a signal transmission means (30) configured to transmit a switching signal to the heating switch (24) in a galvanically isolated manner for controlling the heating switch (24) of the battery heating system (20),
wherein the battery heating system (20) is configured to receive the switching signal from the signal transmission means (30) of the BMS (28).

2. The battery system (100) as claimed in claim 1, wherein the signal transmission means (30) of the BMS (28) comprises a transmission coil and the heating switch (24) comprises a receiving coil for transmitting the switching signal via induction.

3. The battery system (100) as claimed in any one of the preceding claims, further comprising a battery frame and/or a battery heating/cooling circulation system, wherein the battery heating system (20) is arranged into or onto the battery frame or the battery heating/cooling circulation system.

4. The battery system (100) as claimed in any one of the preceding claims, wherein the heating element (22) and the heating switch (24) are connected to the high voltage line (14) between the plurality of battery cells (12) and the main high voltage switch (18) of the high voltage line (14).

5. The battery system (100) as claimed in any one of the preceding claims, wherein the battery heating system (20) comprises a plurality of heating elements (22) connected in series with the heating switch (24).

6. The battery system (100) as claimed in any one of the preceding claims, wherein the battery heating system (20) comprises a plurality of pairs of heating elements (22) and heating switches (24) connected in series with each other, wherein at least two of the pairs of heating elements (22) and heating switches (24) are each connected in parallel to one of the high voltage lines (14).

7. The battery system (100) as claimed in any one of the preceding claims further comprising a second battery heating system (20) comprising a second heating element (22) and a second heating switch (24) connected in series with the second heating element (22),
wherein the second heating element (22) and the second heating switch (24) are connected to both main high voltage lines (14) of the battery pack (10) and
wherein the main high voltage switches (18) are connected between the second battery heating system (20) and the plurality of battery cells (12) of the battery pack (10), respectively.

8. The battery system (100) as claimed in the preceding claim further comprising a second BMS (28) connected to the LV system (26) comprising a second signal transmission means (30) configured to transmit a second switching signal to the second heating switch (24) in a galvanically isolated manner for controlling the second heating switch (24) of the second battery heating system (20),
wherein the second battery heating system (20) is configured to receive the second switching signal from the second signal transmission means (30) of the second BMS (28).

9. An electric vehicle (2000) comprising the battery system (100) as claimed in any one of the preceding claims.

10. A method for a battery system (100), wherein the method comprises the steps of:
a) providing a battery system (100) as defined in any one of the claims 1 to 8;
b) transmitting a switching signal to the heating switch (24) of the battery heating system (20) of the battery system (100) in a galvanically isolated manner for controlling the heating switch (24); and
c) receiving the switching signal by the battery heating system (20).
